# FASCICULE DE BREVET EUROPEEN

(11) **EP 2 627 501 B1**
(45) Date de publication et mention de la délivrance du brevet: **12.08.2015**
(21) Numéro de dépôt: 11779830.6
(22) Date de dépôt: 10.10.2011
(51) Int. Cl.: B31B 1/62, B31C 3/00, C08F 218/08, C09J 123/08, C09J 129/04, C09J 131/04

(54) **COLLE AQUEUSE POUR SUBSTRATS CARTONNÉS A PRISE AMÉLIORÉE**
WÄSSRIGER KLEBSTOFF MIT VERBESSERTER HÄRTUNG FÜR TRÄGERMATERIALIEN AUS PAPPE
IMPROVED-SETTING AQUEOUS ADHESIVE FOR CARDBOARD SUBSTRATES

(30) Priorité: 13.10.2010 FR 1058335
(43) Date de publication de la demande: 21.08.2013
(73) Titulaire: BOSTIK SA, 93210 La Plaine Saint Denis (FR)
(72) Inventeur: MULLER-SELLAK, Saïda, F-60200 Compiegne (FR)
(74) Mandataire: Granet, Pierre
(86) Numéro de dépôt international: PCT/FR2011/052360
(87) Numéro de publication internationale: WO 2012/049413

(56) Documents cités:
- EP-A2- 0 279 384

## Description

La présente invention a pour objet une composition adhésive aqueuse comprenant un alcool polyvinylique qui est exempte d'acide borique, ainsi que son utilisation pour l'assemblage de substrats cartonnés, en vue de la fabrication de manchons cartonnés.

Les compositions adhésives aqueuses comprenant un alcool polyvinylique (PVOH) sont largement utilisées pour le collage de substrats constitués de papier, de carton ou de bois, par exemple dans les domaines de l'emballage rigide ou de la fabrication de manchons cartonnés.

La vitesse de prise de ces compositions est une caractéristique importante de l'assemblage par collage des substrats, et particulièrement des substrats cartonnés ; elle est également dénommée par les termes de « vitesse de montée en cohésion ». Elle correspond au temps nécessaire pour que s'établisse un assemblage de 2 substrats cohésif et résistant à la séparation, ledit temps (ou temps fermé) étant décompté à partir du moment où l'assemblage est réalisé en pressant les 2 substrats l'un contre l'autre après encollage préalable. Dans le cas de compositions adhésives aqueuses comme celles comprenant un alcool polyvinylique, l'obtention d'un assemblage cohésif entre 2 substrats cartonnés nécessite un certain temps, qui correspond à l'évaporation de l'eau et/ou à son absorption par les substrats, et qui est nécessaire à la formation d'un film adhésif liant les substrats à assembler.

Il est nécessaire que les colles aqueuses comprenant un PVOH présentent pour l'assemblage des substrats cartonnés une prise substantiellement instantanée (ou du moins une vitesse de prise très élevée), afin d'assurer aux procédés industriels de fabrication en continu des manchons cartonnés une efficacité et une productivité satisfaisantes.

Les manchons mentionnés ci-dessus sont des tubes creux (que l'on peut également désigner par les termes de rouleaux) constitués par une ou plusieurs couches de carton. Ils sont largement utilisés comme support autour duquel peut être enroulé du papier, un textile ou encore un film (plastique ou de tout autre matériau), à des fins de conditionnement en bobines (ou rouleaux) ; on peut citer à titre d'exemple les rouleaux de papier essuie-tout ménager ou encore les rouleaux de papier toilette.

Ces manchons cartonnés sont fabriqués selon un procédé mis en oeuvre dans des installations industrielles fonctionnant en continu. Ce procédé comprend l'enroulement, généralement en spirale, d'une ou plusieurs bandes cartonnées autour d'un mandrin métallique fixe, dont le diamètre détermine celui du manchon final. Au moins une desdites bandes est encollée préalablement à sa mise sous forme de spire, de manière à permettre l'assemblage des différentes bandes et la constitution d'un tube cartonné rigide. Des moyens appropriés assurent la progression dudit tube autour du mandrin fixe au fur et à mesure de son assemblage, ainsi que sa découpe, selon la longueur désirée.

Une vitesse de prise élevée pour ladite colle est donc nécessaire pour assurer la cohésion de l'assemblage des spires de bandes cartonnées et la constitution d'un manchon cartonné rigide, dans un temps compatible avec sa vitesse de progression sur le mandrin fixe, et par conséquent avec la productivité de l'installation industrielle.

Dans le cas de manchons fabriqués à partir d'une seule bande cartonnée (désignés également par l'expression anglaise de «one ply core» ), la colle est appliquée sur une partie de la largeur de la bande, laquelle est constituée d'un carton à grammage élevé. Ladite partie correspond à la zone de chevauchement et d'assemblage entre 2 spires consécutives. Une vitesse de prise élevée et un haut niveau de cohésion pour la colle sont donc encore plus critiques pour assurer la rigidité requise au manchon résultant de l'assemblage.

Quelques demandes de brevets décrivent des adhésifs convenant à une mise en oeuvre pour la fabrication de manchons cartonnés.

La demande internationale WO 01/98069 mentionne des compositions adhésives aqueuses comprenant un alcool polyvinylique (PVOH) et/ou des émulsions d'homopolymère ou de copolymère d'acétate de polyvinyle, notamment de copolymère d'éthylène et d'acétate de vinyle. Cette demande enseigne l'incorporation de mousse dans la composition adhésive afin d'améliorer l'efficacité du procédé de fabrication et la vitesse de production.

La demande internationale WO 2004/076163 enseigne l'utilisation d'un adhésif ré-activable comprenant un composant absorbant les radiations émises par une source, par exemple à Infra Rouge, à Ultra Son ou laser.

Par ailleurs on connaît de façon générale, notamment par la demande française FR1419673, l'utilisation de très petites quantités d'acide borique pour améliorer la vitesse de prise de compositions adhésives aqueuses à base de PVOH et de poly(acétate de vinyle), en vue de l'assemblage des substrats cartonnés.

Ces compositions incorporant de l'acide borique sont en pratique très largement utilisées dans les procédés industriels de fabrication en continu des manchons cartonnés, en raison notamment de l'augmentation de vitesse de ligne qu'elles permettent.

Il apparaît toutefois à présent que l'utilisation de l'acide borique est susceptible d'entraîner des risques toxicologiques.

Il est donc souhaitable de proposer des compositions adhésives aqueuses comprenant un PVOH qui offrent les mêmes performances en terme d'assemblage de substrats cartonnés que les compositions connues, sans toutefois incorporer d'acide borique.

La présente invention a notamment pour but de proposer une telle composition.

Un autre but de la présente invention est de proposer une composition adhésive aqueuse comprenant un PVOH qui offre une vitesse de prise et/ou une cohésion améliorée pour l'assemblage de substrats cartonnés.

Ces buts peuvent être atteints en totalité ou en partie au moyen de la composition décrite ci-après, sans préjudice d'autres avantages également mentionnés ci-après.

La présente invention a donc pour objet en premier lieu une composition adhésive aqueuse comprenant au moins un alcool polyvinylique (A), un copolymère (B) d'acétate de vinyle et d'éthylène en dispersion dans l'eau, et éventuellement un homopolymère (C) d'acétate de polyvinyle en dispersion dans l'eau, ladite composition étant caractérisée en ce que :
- elle est substantiellement exempte d'acide borique,
- elle comprend le copolymère (B) en une quantité allant de 20 % à 45 %,
- elle comprend des quantités d'eau et des polymères (A), (B) et éventuellement (C) telles que sa viscosité est comprise entre 1500 et 8000 mPa.s, de préférence entre 2500 et 4000 mPa.s, et
- elle est susceptible d'être obtenue par l'incorporation du copolymère (B) sous la forme d'une dispersion aqueuse qui présente pour une teneur en extrait sec d'environ 55 % une viscosité supérieure à 4000 mPa.s.

Les viscosités mentionnées ci-dessus sont mesurée à 23°C avec un viscosimètre Brookfield RVT équipé d'un mobile tournant à 20 tr/minute ; il en est de même pour toutes les viscosités mentionnées dans le présent texte, en l'absence d'indication contraire.

La composition selon l'invention est substantiellement exempte d'acide borique en raison de l'absence d'incorporation de ce composé durant la préparation de ladite composition ; la présence éventuelle de ce composé ne saurait donc être détectée qu'à l'état de traces ou d'impuretés et ne saurait dépasser la limite maximale éventuelle de 10 ppm.

L'acide borique est actuellement l'objet de préoccupations sérieuses quant à ses effets toxicologiques. Sa mise en oeuvre dans une colle qui entre dans la fabrication des manchons cartonnés présents dans les rouleaux de papier essuie tout, d'utilisation courante dans les cuisines, pose dès lors le problème du risque potentiel du contact alimentaire indirect. L'absence d'acide borique dans la composition selon l'invention est donc particulièrement avantageuse.

De plus, malgré l'absence d'acide borique, la composition objet de l'invention présente avantageusement, lorsqu'elle est appliquée à l'assemblage de 2 substrats cartonnés, une vitesse de prise (ou de montée en cohésion) similaire, et même supérieure, à celle obtenue en pratique en présence de ce composé.

Les quantités de composants des compositions décrites dans le présent texte, incluant la composition objet de l'invention, sont exprimées (en l'absence d'indications contraires) en pourcentages poids/poids.

L'alccol polyvinylique, polymère ayant une chaîne principale de type polyméthylène avec des groupements hydroxyles pendants, est une résine synthétique soluble dans l'eau. Il est fabriqué par hydrolyse de l'acétate de polyvinyle et substitution des groupes pendants acétate par des groupes hydroxyles. L'alccol polyvinylique est l'un des très rares polymères à haut poids moléculaire commerciaux qui est soluble dans l'eau. Il est disponible commercialement sous une forme solide de granulés ou de poudre, dans des grades de résine qui incluent :
- une forme totalement hydrolysée (substitution de 99 % des groupes acétate),
- une forme partiellement hydrolysée (substitution de 85 à 91 % des groupes acétates), et
- une forme hydrolysée intermédiaire (substitution de 92 à 98 % des groupes acétates).

Les propriétés des PVOH varient en fonction du poids moléculaire de l'acétate de polyvinyle de départ et du degré d'hydrolyse. Les alcools polyvinyliques sont produits communément avec des poids moléculaires moyens qui vont d'environ 10 000 à 200 000. Le poids moléculaire des grades d'alcool polyvinyliques commerciaux est apprécié communément par la viscosité d'une solution aqueuse à 4% en poids. Cette viscosité peut ainsi aller d'environ 4 à 72 mPa.s.

Selon une variante préférée des compositions selon l'invention, l'alcool polyvinylique (A) est partiellement hydrolysé, correspondant à un degré d'hydrolyse allant de 85 à 91 %.

La quantité d'alcool polyvinylique (A) est déterminée en fonction de la quantité d'eau et des quantités des polymères (B) et éventuellement (C) qui sont présents dans la composition objet de l'invention, de manière à atteindre la valeur de viscosité spécifiée pour la composition adhésive. Sur un plan pratique, cette quantité de (A) peut varier dans un domaine allant de 0,3 à 10 %, le domaine allant de 0,5 à 5 % étant plus particulièrement préféré.

Selon une autre variante préférée, la quantité d'alcool polyvinylique (A) est supérieure ou égale à 2 % et inférieure ou égale à 5 %. La composition selon l'invention présente alors un taux de repulpabilité amélioré, supérieur à 70 %, et encore plus préférentiellement supérieur à 80 %.

La repulpabilité est la capacité d'un adhésif, présent à l'état de film adhésif liant des substrats en papier ou en carton, à être recyclé dans la pulpe, autrement dit dans la suspension ou solution aqueuse de fibres et/ou de papier, qui est mise en oeuvre dans les opérations de recyclage des déchets à base de papier et/ou de carton conduites par l'industrie papetière. Un adhésif non repulpable conduit à la formation d'agglomérats ou globules qui entraînent des dysfonctionnements dans lesdites opérations de recyclage, en raison d'une dispersibilité insuffisante dans l'eau du film adhésif même fragmenté.

Une telle repulpabilité est donc particulièrement avantageuse pour la fabrication industrielle des manchons cartonnés, car elle facilite le recyclage des manchons ou partie de manchons fabriqués non conformes.

Les dispersions aqueuses de copolymères d'éthylène et d'acétate de vinyle sont des produits disponibles dans le commerce. Ceux-ci sont généralement préparés par un procédé de polymérisation en émulsion dans l'eau des monomères, en présence d'un système stabilisant. Ce procédé conduit à la formation de dispersions (ou suspensions) présentant un pourcentage d'extrait sec situé en général entre 50 et 75 %, qui sont caractérisées par leur viscosité.

Il a à présent été trouvé que les compositions selon l'invention présentent une vitesse de prise améliorée lors du collage de substrats cartonnée, grâce à l'utilisation pour leur préparation d'une dispersion aqueuse de copolymère d'éthylène et d'acétate de vinyle qui présente, pour un extrait sec d'environ 55 %, une viscosité supérieure à 4000 mPa.s.

On préfère une composition adhésive aqueuse susceptible d'être obtenue par l'incorporation du copolymère (B) d'acétate de vinyle et d'éthylène sous la forme d'une dispersion aqueuse présentant pour une teneur en extrait sec d'environ 55 % une viscosité inférieure à 11000 mPa.s, et encore plus préférentiellement comprise entre 4000 et 7000 mPa.s.

De telles dispersions aqueuses sont disponibles dans le commerce. On peut citer ainsi le produit AIRFLEX^{®} EP14 (également connu sous la dénomination de VINNAPAS^{®} EP14) commercialisé par la société Wacker, qui est une dispersion aqueuse à 55% d'extrait sec dont la viscosité est comprise entre 4000 et 7000 mPa.s.

La quantité du copolymère (B) peut varier selon la quantité des autres ingrédients de la composition, de manière à ce que la viscosité de la composition adhésive aqueuse objet de l'invention soit comprise dans le domaine indiqué. Ladite quantité peut ainsi varier dans un domaine allant de 20 à 45 %, de préférence entre 25 et 40 %.

La composition selon l'invention peut également comprendre un homopolymère (C) d'acétate de polyvinyle en dispersion dans l'eau. De tels homopolymères sont facilement disponibles dans le commerce sous la forme de dispersions aqueuses obtenues par polymérisation en émulsion du monomère.

La quantité de l'homopolymère (C) utilisable dans la pratique de l'invention peut aller selon les cas jusqu'à 20 %, de préférence jusqu'à 15 %.

La quantité d'eau incluse dans la composition selon l'invention est également fixée en fonction de la caractéristique de viscosité précédemment mentionnée et varie en général d'environ 45 à 60 %.

La composition selon l'invention peut également comprendre des additifs usuels dans le domaine des compositions adhésives aqueuses comprenant des polymères vinyliques. On peut ainsi introduire une quantité de quelques pourcents d'un plastifiant, pour améliorer la souplesse du film adhésif unissant les substrats cartonnés (tel qu'un dibenzoate d'éthers de glycol ou un glycéryl triacétate), une quantité de 0,1 à 0,4 % d'un biocide (fongicide ou bactéricide) pour protéger la composition des attaques notamment bactériennes, ou encore une quantité de 0,1 à 0,3 % d'un agent anti-mousse pour réduire la formation de mousses durant la mise en oeuvre de l'adhésif.

La composition selon l'invention est préparée à partir de PVOH sec, d'une dispersion aqueuse du copolymère d'acétate de vinyle et d'éthylène, et, le cas échéant, d'une dispersion aqueuse de l'homopolymère d'acétate de polyvinyle.

Le PVOH est tout d'abord mis en oeuvre sous la forme d'une solution mère avec une teneur comprise entre 15 et 35 % qui est obtenue par dissolution à chaud du produit sec à une température allant de 90 à 95 °C. La viscosité de cette solution mère peut varier de 2 000 à 100 000mPa.s.

Puis on ajoute sous agitation à cette solution mère les dispersions aqueuses du copolymère et, le cas échéant, de l'homopolymère. Les autres additifs sont ensuite introduits et l'ensemble est laissé sous agitation jusqu'à homogénéisation complète durant un temps compris entre 30 et 60 minutes.

L'invention concerne encore l'utilisation de la composition adhésive aqueuse telle que définie précédemment pour l'assemblage de substrats cartonnés dans la fabrication d'emballages rigides ou de manchons.

La composition selon l'invention peut avantageusement être utilisée pour assembler les emballages rigides cartonnés les plus divers qui sont utilisés pour le conditionnement tels que boîtes, réceptacles, pochettes, étuis ou sacs. Elle est habituellement appliquée sur les substrats à assembler sous la forme de cordons ou de nappes par des buses appropriées, telles que des buses à lèvre.

On préfère mettre en oeuvre la composition selon l'invention dans un procédé de fabrication de manchons cartonnés comprenant l'enroulement en spirale d'une bande cartonnée. Cette mise en oeuvre s'effectue en général par enduction de ladite bande sur la zone de chevauchement des spires, par exemple au moyen d'une buse à lèvre.

Les exemples suivants sont donnés à titre purement illustratif de l'invention, et ne sauraient en aucun cas être interprétés pour en limiter la portée.

### Exemple 1 : composition adhésive aqueuse comprenant un alcool polyvinylique et un copolymère d'éthylène et d'acétate de vinyle introduit sous la forme d'une dispersion de viscosité de 5500 mPa.s :

On utilise un alcool polyvinylique (A) 47/88 fourni à l'état de solide pulvérulent sous la dénomination CELVOL^{®} 540 par la société Celanese. Ce PVOH présente un degré d'hydrolyse de 88 % et une viscosité en solution à 4% égale à 47 mPa.s.

On utilise un copolymère d'acétate de vinyle et d'éthylène (B) sous la forme d'une dispersion aqueuse ayant un extrait sec de 55 % et une viscosité de 5500 mPa.s disponible sous la dénomination commerciale VINNAPAS^{®} EP14 auprès de la société Wacker.

On dissout le PVOH à chaud à 95°C de manière obtenir une solution mère à 18 % que l'on refroidit à température ambiante.

La composition indiquée dans le Tableau, dans laquelle les teneurs en polymères (A) et (B) sont exprimées en pourcentage sur la base des composants secs, est alors préparée par mélange sous agitation :
- de la solution mère de PVOH,
- du VINNAPAS^{®} EP14,
- d'un agent antimousse et d'un biocide, puis
- d'un dibenzoate d'éthers de glycol comme plastifiant.

On complète avec de l'eau pour atteindre la viscosité indiquée.

La composition ainsi obtenue est soumise aux tests décrits ci-après.

### Test d'évaluation de la vitesse de prise :

La vitesse de prise (ou de montée en cohésion) est évaluée sur un assemblage de 2 substrats cartonnés plans liés par la composition à tester.

Le principe du test consiste à mesurer le pouvoir adhésif (ou cohésion) développé par l'assemblage après une durée de 3 secondes à compter de sa constitution (par pressage des substrats après encollage préalable).

On utilise comme matériau pour les 2 substrats un carton de grammage égal à 260 g/m². On découpe dans ce carton 2 éprouvettes sous forme respectivement d'une bande rectangulaire de dimensions 20x3 cm et d'une feuille de dimensions 10x6 cm.

Les opérations suivantes sont réalisées dans une pièce maintenue à une température et une atmosphère contrôlées : 23°C et 50% d'humidité relative.

On enduit préalablement la bande cartonnée au moyen de la composition adhésive à tester à l'aide d'un rouleau gravé, de manière à obtenir un grammage de 40 g/m².

On utilise ensuite un appareil de mesure du pouvoir adhésif selon les normes de la Fédération Internationale des fabricants de Papier Gommés (FIPAGO) commercialisé par la société Strohlein.

La feuille cartonnée est immobilisée, selon un plan horizontal, sur un palier de l'appareil de mesure qui est solidaire d'un bras mobile capable d'effectuer un mouvement de balancier autour d'un pivot.

Une extrémité de la bande cartonnée est, sur environ 2 cm de longueur, mise en contact manuellement, par son côté enduit par la composition adhésive, avec un palier fixe lié à l'appareil, qui est co-planaire et adjacent au palier mobile précédent. La plus grande partie de la bande est ensuite appliquée sur la feuille et pressée uniformément sur cette dernière automatiquement, au moyen d'un dispositif de pressage de l'appareil qui consiste en un cylindre lesté animé d'un mouvement combiné de translation et de rotation. Ce pressage est opéré 5 secondes après l'enduction de la bande (temps ouvert).

3 secondes après le pressage de la bande cartonnée sur la feuille cartonnée (durée correspondant au « temps fermé »), l'assemblage adhésif ainsi constitué est rompu par le déclenchement d'un mouvement de balancier du bras mobile qui résulte dans l'éloignement rapide du palier mobile du palier fixe : ainsi les 2 substrats sont séparés, la feuille cartonnée restant liée au palier mobile et la bande cartonnée restant liée au palier fixe par son extrémité.

L'appareil donne directement sur une échelle graduée de 0 à 100 (en mmkP) le pouvoir adhésif de l'assemblage.

Le résultat, indiqué dans le Tableau, dénote une excellente cohésion obtenue pour un temps fermé de 3 secondes, correspondant à une vitesse de prise qui est même améliorée par rapport à celle d'une composition adhésive de référence (à base de PVOH et incluant 0,3 % d'acide borique), telle que utilisée pour la fabrication de manchons cartonnés.

### Test de repulpabilité :

La repulpabilité de la composition adhésive est obtenue en incorporant dans l'eau un poids fixé de film adhésif sec, et en évaluant par filtration la fraction non dissoute au bout d'un temps spécifié.

Pour cela, on prépare un film adhésif sec d'épaisseur contrôlée égale à 300 µm, par enduction sur un papier siliconé au moyen d'un filmographe, puis séchage à poids constant durant environ 48 heures.

Ce film adhésif sec est réduit en petits morceaux de taille de l'ordre de 5 mm² dont on prélève une quantité ayant un poids d'environ 5 g, mesuré avec la précision requise. Cette quantité est introduite dans 900 ml d'eau portée à une température de 40°C et à un pH égal à 5 ; le mélange obtenu est maintenu durant 1 heure et demie sous agitation à 40°C.

Le mélange est alors passé au travers d'un filtre de 100 um. La quantité résiduelle de particules de film adhésif retenue sur le filtre est déterminée par pesée avec la précision requise. On en déduit par différence le poids de particules soit passées en solution soit de taille inférieure à 100 µm ; ce poids est exprimé en pourcentage du poids de film adhésif sec introduit pour donner le taux de repulpabilité.

Le résultat est indiqué dans le Tableau et dénote une excellente repulpabilité de la composition.

### Exemple 2 (comparatif) : composition adhésive aqueuse comprenant un alcool polyvinylique et un copolymère d'éthylène et d'acétate de vinyle introduit sous la forme d'une dispersion de viscosité 3000 mPa.s :

On répète l'exemple 1 en remplaçant le VINNAPAS^{®} EP14 par le VINNAPAS^{®} 8331 DEV qui est une dispersion aqueuse d'un copolymère (B) d'acétate de vinyle et d'éthylène à 55% d'extrait sec ayant une viscosité de 3000 mPa.s.

La viscosité et les résultats concernant la composition obtenue sont indiqués dans le Tableau.

Le pouvoir adhésif égal à 0 qui est obtenu indique donc que cette composition, pour le même temps fermé de 3 secondes, ne développe entre les 2 substrats cartonnés aucune cohésion susceptible de s'opposer à leur séparation.

### Exemple 3:

On répète l'exemple 1 en incorporant le copolymère (B) d'acétate de vinyle et d'éthylène pour partie sous la forme de VINNAPAS^{®} EP14 et pour partie sous la forme de VINNAPAS^{®} EP 400 qui est une dispersion aqueuse ayant 55 % d'extrait sec et une viscosité d'environ 2400 mPa.s.

La viscosité et les résultats concernant la composition obtenue sont indiqués dans le Tableau.

### Exemples 4 et 5 : composition adhésive aqueuse à base d'alcool polyvinylique comprenant un homopolymère d'acétate de polyvinyle et un copolymère d'éthylène et d'acétate de vinyle introduit sous la forme d'une dispersion de viscosité 5500 mPa.s :

On utilise un homopolymère d'acétate de polyvinyle (C) sous la forme d'une dispersion aqueuse à 57 % d'extrait sec qui a été préparée par une réaction de polymérisation en émulsion. La viscosité de cette dispersion est d'environ 50 Pa.s.

On répète l'exemple 1 avec les teneurs en PVOH et en copolymère (B) indiquées dans le Tableau, en ajoutant, après le VINNAPAS^{®} EP14 et avant l'introduction des agents antimousse et biocide, les quantités indiquées dans le Tableau de l'homopolymère (C) d'acétate de polyvinyle (teneur en composant sec) qui est incorporé sous sa forme de dispersion aqueuse.

La viscosité des compositions obtenues et les résultats correspondants sont également indiqués dans le Tableau.

**Tableau**

| Composants | Teneur de la composition en composants (en %) | | | | |
|---|---|---|---|---|---|
| | Exemple 1 | Exemple 2 (comparatif) | Exemple 3 | Exemple 4 | Exemple 5 |
| Alcool polyvinylique (A) 47/88 | 2,9 | 3,2 | 0,9 | 0,9 | 2,3 |
| Copolymère (B) (VINNAPAS^{®} EP14) | 35,2 | - | 32,8 | 33,3 | 26,0 |
| Copolymère (B) (VINNAPAS^{®} 8331 DEV) | - | 36,9 | - | - | - |
| Copolymère (B) (VINNAPAS^{®} EP400) | - | - | 13,2 | - | - |
| Homopolymère (C) | - | - | - | 13,7 | 13,4 |
| Agent plastifiant | 4 | 4 | 5 | 4 | 4 |
| Agent biocide | 0,1 | 0,2 | 0,2 | 0,2 | 0,3 |
| Agent antimousse | 0,1 | 0,2 | 0,2 | 0,2 | 0,3 |
| Eau | 57,7 | 55,5 | 47,7 | 47,7 | 53,7 |
| | | | | | |
| Viscosité (mPa.s) | 3500 | 2500 | 2800 | 3000 | 3000 |
| Vitesse de prise (mmkP) | 13 | 0 | 7 | 35 | 13 |
| Taux de repulpabilité (en %) | 98 | 30 | 60 | 30 | 90 |

## Revendications

1. Composition adhésive aqueuse comprenant au moins un alcool polyvinylique (A), un copolymère (B) d'acétate de vinyle et d'éthylène en dispersion dans l'eau, et éventuellement un homopolymère (C) d'acétate de polyvinyle en dispersion dans l'eau, ladite composition étant **caractérisée en ce que** :
- elle est substantiellement exempte d'acide borique,
- elle comprend le copolymère (B) en une quantité allant de 20 % à 45 %,
- elle comprend des quantités d'eau et des polymères (A), (B) et éventuellement (C) telles que sa viscosité est comprise entre 1500 et 8000 mPa.s, et
- elle est susceptible d'être obtenue par l'incorporation du copolymère (B) sous la forme d'une dispersion aqueuse qui présente pour une teneur en extrait sec d'environ 55 % une viscosité supérieure à 4000 mPa.s.

2. Composition adhésive aqueuse selon la revendication 1 **caractérisée en ce que** sa viscosité est comprise entre 2500 et 4000 mPa.s.

3. Composition adhésive aqueuse selon l'une des revendications 1 ou 2, **caractérisée en ce que** l'alcool polyvinylique (A) est partiellement hydrolysé, correspondant à un degré d'hydrolyse allant de 85 à 91 %.

4. Composition adhésive aqueuse selon l'une des revendications 1 à 3, **caractérisée en ce que** la quantité de (A) varie dans un domaine allant de 0,3 à 10 %.

5. Composition adhésive aqueuse selon l'une des revendications 1 à 4, **caractérisée en ce que** la quantité d'alcool polyvinylique (A) est supérieure ou égale à 2 % et inférieure ou égale à 5 %.

6. Composition adhésive aqueuse selon l'une des revendications 1 à 5, **caractérisée en ce que** le copolymère (B) d'acétate de vinyle et d'éthylène est incorporé sous la forme d'une dispersion aqueuse présentant pour une teneur en extrait sec d'environ 55 % une viscosité inférieure à 11000 mPa.s.

7. Composition adhésive aqueuse selon l'une des revendications 1 à 6, **caractérisée en ce que** le copolymère (B) d'acétate de vinyle et d'éthylène est incorporé sous la forme d'une dispersion aqueuse présentant pour une teneur en extrait sec d'environ 55 % une viscosité comprise entre 4000 et 7000 mPa.s.

8. Composition adhésive aqueuse selon l'une des revendications 1 à 7, **caractérisée en ce qu'**elle comprend en outre jusqu'à 20 % d'un homopolymère (C) d'acétate de polyvinyle en dispersion dans l'eau.

9. Utilisation de la composition adhésive aqueuse telle que définie dans l'une des revendications 1 à 8 pour l'assemblage de substrats cartonnés dans la fabrication d'emballages rigides ou de manchons.

10. Utilisation selon la revendication 9 **caractérisée en ce que** l'assemblage de substrats cartonnés est mis en oeuvre dans un procédé de fabrication de manchons cartonnés comprenant l'enroulement en spirale d'une bande cartonnée.

## Patentansprüche

1. Wässrige Klebstoffzusammensetzung, umfassend mindestens einen Polyvinylalkohol (A), ein in Wasser dispergiertes Vinylacetat-Ethylen-Copolymer (B) und gegebenenfalls ein in Wasser dispergiertes Polyvinylacetat-Homopolymer (C), wobei die Zusammensetzung **dadurch gekennzeichnet ist, dass**:
- sie weitgehend frei von Borsäure ist,
- sie das Copolymer (B) in einer Menge im Bereich von 20% bis 45% umfasst,
- sie solche Mengen von Wasser und Polymeren (A), (B) und gegebenenfalls (C) umfasst, dass ihre Viskosität zwischen 1500 und 8000 mPa.s liegt, und
- sie durch Einarbeitung des Copolymers (B) in Form einer wässrigen Dispersion mit einer Viskosität von mehr als 4000 mPa.s bei einem Trockensubstanzgehalt von ungefähr 55% erhältlich ist.

2. Wässrige Klebstoffzusammensetzung nach Anspruch 1, **dadurch gekennzeichnet, dass** ihre Viskosität zwischen 2500 und 4000 mPa.s liegt.

3. Wässrige Klebstoffzusammensetzung nach Anspruch 1 oder 2, **dadurch gekennzeichnet, dass** der Polyvinylalkohol (A) einem Hydrolysegrad im Bereich von 85 bis 91% entsprechend partiell hydrolysiert ist.

4. Wässrige Klebstoffzusammensetzung nach einem der Ansprüche 1 bis 3, **dadurch gekennzeichnet, dass** die Menge von (A) in einem Bereich von 0,3 bis 10% variiert.

5. Wässrige Klebstoffzusammensetzung nach einem der Ansprüche 1 bis 4, **dadurch gekennzeichnet, dass** die Menge an Polyvinylalkohol (A) größer gleich 2% und kleiner gleich 5% ist.

6. Wässrige Klebstoffzusammensetzung nach einem der Ansprüche 1 bis 5, **dadurch gekennzeichnet, dass** das Vinylacetat-Ethylen-Copolymer (B) in Form einer wässrigen Dispersion mit einer Viskosität von weniger als 11.000 mPa.s bei einem Trockensubstanzgehalt von ungefähr 55% eingearbeitet wird.

7. Wässrige Klebstoffzusammensetzung nach einem der Ansprüche 1 bis 6, **dadurch gekennzeichnet, dass** das Vinylacetat-Ethylen-Copolymer (B) in Form einer wässrigen Dispersion mit einer Viskosität zwischen 4000 und 7000 mPa.s bei einem Trockensubstanzgehalt von ungefähr 55% eingearbeitet wird.

8. Wässrige Klebstoffzusammensetzung nach einem der Ansprüche 1 bis 7, **dadurch gekennzeichnet, dass** sie außerdem bis zu 20% eines in Wasser dispergierten Polyvinylacetat-Homopolymers (C) umfasst.

9. Verwendung der wässrigen Klebstoffzusammensetzung gemäß einem der Ansprüche 1 bis 8 zum Zusammenbau von Kartonsubstraten bei der Herstellung von steifen Verpackungen oder Hülsen.

10. Verwendung nach Anspruch 9, **dadurch gekennzeichnet, dass** der Zusammenbau von Kartonsubstraten bei einem Verfahren zur Herstellung von Kartonhülsen eingesetzt wird, bei dem ein Kartonstreifen zu einer Spirale zusammengerollt wird.

## Claims

1. Aqueous adhesive composition comprising at least a polyvinyl alcohol (A), a copolymer (B) of vinyl acetate and ethylene in dispersion in water, and optionally a homopolymer (C) of polyvinyl acetate in dispersion in water, said composition being **characterized in that**:
- it is substantially free from boric acid,
- it comprises the copolymer (B) in an amount ranging from 20% to 45%,
- it comprises amounts of water and polymers (A), (B) and optionally (C) such that its viscosity is between 1500 and 8000 mPa.s, and
- it is able to be obtained by incorporating the copolymer (B) in the form of an aqueous dispersion which has, for a solids content of approximately 55%, a viscosity greater than 4000 mPa.s.

2. Aqueous adhesive composition according to Claim 1, **characterized in that** its viscosity is between 2500 and 4000 mPa.s.

3. Aqueous adhesive composition according to either of Claims 1 and 2, **characterized in that** the polyvinyl alcohol (A) is partially hydrolyzed, corresponding to a degree of hydrolysis ranging from 85 to 91%.

4. Aqueous adhesive composition according to one of Claims 1 to 3, **characterized in that** the amount of (A) varies within a range of from 0.3 to 10%.

5. Aqueous adhesive composition according to one of Claims 1 to 4, **characterized in that** the amount of polyvinyl alcohol (A) is greater than or equal to 2% and less than or equal to 5%.

6. Aqueous adhesive composition according to one of Claims 1 to 5, **characterized in that** the copolymer (B) of vinyl acetate and ethylene is incorporated in the form of an aqueous dispersion having, for a solids content of approximately 55%, a viscosity of less than 11 000 mPa.s.

7. Aqueous adhesive composition according to one of Claims 1 to 6, **characterized in that** the copolymer (B) of vinyl acetate and ethylene is incorporated in the form of an aqueous dispersion having, for a solids content of approximately 55%, a viscosity of between 4000 and 7000 mPa.s.

8. Aqueous adhesive composition according to one of Claims 1 to 7, **characterized in that** it also comprises up to 20% of a homopolymer (C) of polyvinyl acetate in dispersion in water.

9. Use of the aqueous adhesive composition as defined in one of Claims 1 to 8, for the assembling of cardboard substrates in the manufacture of rigid packaging or tubes.

10. Use according to Claim 9, **characterized in that** the assembling of cardboard substrates is implemented in a process for the manufacture of cardboard tubes which comprises winding a cardboard strip in a spiral.
